(19) **Europäisches Patentamt / European Patent Office / Office européen des brevets**

(11) **EP 1 887 019 A1**

(12) **EUROPEAN PATENT APPLICATION**
published in accordance with Art. 153(4) EPC

(43) Date of publication:
**13.02.2008 Bulletin 2008/07**

(51) Int Cl.:
***C08F 283/12*** *(2006.01)*    ***C08L 27/06*** *(2006.01)*
***C08L 51/08*** *(2006.01)*

(21) Application number: **06745602.0**

(22) Date of filing: **24.04.2006**

(86) International application number:
**PCT/JP2006/308524**

(87) International publication number:
**WO 2006/120878 (16.11.2006 Gazette 2006/46)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.05.2005 JP 2005140757**

(71) Applicant: **Kaneka Corporation Kita-ku Osaka-shi, Osaka 530-8288 (JP)**

(72) Inventors:
- **TAKAKI, Akira Kobe-shi, Hyogo 657-0068 (JP)**
- **HASHIMOTO, Tomomichi Settsu-shi, Osaka 566-0072 (JP)**
- **SHIBATA, Takao Himeji-shi, Hyogo 670-0954 (JP)**

(74) Representative: **Vossius & Partner Siebertstrasse 4 81675 München (DE)**

(54) **POLYORGANOSILOXANE-CONTAINING GRAFT COPOLYMER AND VINYL CHLORIDE RESIN COMPOSITIONS CONTAINING THE COPOLYMER**

(57) An object of the present invention is to provide a polyorganosiloxane-containing graft copolymer capable of further improving impact resistance of a vinyl chloride-based resin without causing a significant problem such as lowering of transparency, and a vinyl chloride-based resin composition containing the copolymer. The above object is achieved by a polyorganosiloxane-containing graft copolymer (C) obtained by graft-polymerizing 65 to 5 parts by weight of at least one monomer (B) selected from the group consisting of (meth) acrylic acid ester, aromatic vinyl, and a vinyl cyanide compound under a presence of 35 to 95 parts by weight of a polyorganosiloxane (A) consisting of 0.001 to 0.5% by weight of a bifunctional siloxane-based graft-crosslinking agent (a) and 99.999 to 99.5% by weight of organosiloxane (b) (with the proviso that a total of (A) and (B) is 100 parts by weight), the graft copolymer **characterized by** having a degree of swelling of acetone-insoluble matter in toluene being 4000% or more; and a vinyl chloride-based resin composition containing the graft copolymer.

EP 1 887 019 A1

**Description**

TECHNICAL FIELD

The present invention relates to a polyorganosiloxane-containing graft copolymer, and a vinyl chloride-based resin composition containing the copolymer.

BACKGROUND ART

Vinyl chloride-based resins are used in wide range of application because they are economical and excellent in flame resistance, gas barrier property and transparency. However, vinyl chloride-based resins have a drawback of being poor in impact resistance. Various proposals have heretofore been made in order to improve impact resistance of vinyl chloride-based resins. For example, a so-called MBS resin obtained by graft-copolymerizing methyl methacrylate, styrene and the like with a butadiene-based rubber was developed. After that, it was found that impact resistance of a molded article can be improved by blending the MBS resin having enlarged particle diameters with a vinyl chloride-based resin when molding, so that various techniques for enlarging particle diameters have been developed (for example, refer to Patent documents 1 to 3).

After that, a technique of improving impact resistance and the like by adding 0.1 to a few percent by weight of a silicone oil such as diorganopolysiloxane with a thermoplastic resin was developed. However, there has been a problem in that the thermoplastic resin has insufficient durability although it exhibits an excellent effect immediately after molding since the silicone oil easily leaks onto the resin surface (for example, refer to Patent document 4). Additionally, an addition of a silicone oil has a drawback of conspicuously lowering transparency of a molded article.

[Patent document 1] Japanese Examined Patent Application Publication No. 42-22541
[Patent document 2] Japanese Examined Patent Application Publication No. 47-49191
[Patent document 3] Japanese Patent Application Laid-Open Publication No. 4-170458
[Patent document 4] Japanese Patent Application Laid-Open Publication No. 2000-239398

DISCLOSURE OF THE INVENTION

PROBLEMS TO BE SOLVED BY THE INVENTION

In the technical field, there still remains a deep-rooted demand for an improvement of impact resistance, but the demand has not been satisfied sufficiently with a use of the prior art alone. An object of the present invention is to provide a polyorganosiloxane-containing graft copolymer which is capable of further improving impact resistance of vinyl chloride-based resins without causing significant problems, and a vinyl chloride-based resin composition containing the copolymer.

MEANS FOR SOLVING THE PROBLEMS

The present inventors intensively studied for the above object, and completed the present invention with the finding that impact resistance of a final molded article can be markedly improved by adding a very slight amount of a specific polyorganosiloxane-containing graft copolymer using a specific amount of organosiloxane and a bifunctional siloxane-based graft-crosslinking agent to a composition containing a rubber-containing graft polymer such as a vinyl chloride-based resin and a MBS resin.

Namely, the present invention relates to a graft copolymer which is a polyorganosiloxane-containing graft copolymer (C) obtained by graft-polymerizing 65 to 5 parts by weight of at least one monomer (B) selected from the group consisting of (meth)acrylic acid ester, aromatic vinyl, and a vinyl cyanide compound in a presence of 35 to 95 parts by weight of polyorganosiloxane (A) consisting of 0.001 to 0.5% by weight of a bifunctional siloxane-based graft-crosslinking agent (a) and 99.999 to 99.5% by weight of organosiloxane (b) (with the proviso that a total of the (A) and (B) is 100 parts by weight), wherein a degree of swelling of an acetone-insoluble matter in toluene is 4000% or more.

The present invention relates to the polyorganosiloxane-containing graft copolymer wherein a preferred embodiment is that the polyorganosiloxane (A) consists of 0.01 to 0.3% by weight of the bifunctional siloxane-based graft-crosslinking agent (a) and 99.99 to 99.7% by weight of the organosiloxane (b).

The present invention relates to any one of the polyorganosiloxane-containing graft copolymer wherein a preferred embodiment is that a volume average particle diameter of the polyorganosiloxane (A) is 0.001 to 0.075 $\mu$m.

The present invention relates to any one of the polyorganosiloxane-containing graft copolymer wherein a preferred embodiment is that the organosiloxane (b) contains 1 to 40% by weight of diphenyldialkoxysilane (c).

The present invention relates to any one of the polyorganosiloxane-containing graft copolymer wherein a preferred embodiment is that the monomer (B) is (meth)acrylic acid ester.

The present invention relates to a vinyl chloride-based resin composition characterized by containing 100 parts by weight of vinyl chloride-based resin (D), 3 to 25 parts by weight of a rubber-containing graft polymer (E) obtained by graft-polymerizing a vinyl monomer to a butadiene-based rubber or an acryl-based rubber, and 0.01 to 3 parts by weight of the polyorganosiloxane-containing graft copolymer (C) in any of the above descriptions.

The present invention relates to the vinyl chloride-based resin composition wherein a preferred embodiment is that a content of the polyorganosiloxane-containing graft copolymer (C) is 0.01 to 0.5 part by weight.

The present invention relates to the vinyl chloride-based resin composition in any of the above descriptions wherein a preferred embodiment is that the vinyl chloride-based resin composition is transparent.

EFFECT OF THE INVENTION

The present invention can markedly improve impact resistance of a final molded article by adding a very slight amount of a specific polyorganosiloxane-containing graft copolymer using a specific amount of organosiloxane and a bifunctional siloxane-based graft-crosslinking agent to a composition containing a rubber-containing graft polymer such as a vinyl chloride-based resin and a MBS resin.

BEST MODE FOR CARRYING OUT THE INVENTION

The present invention relates to a polyorganosiloxane-containing graft copolymer obtained by graft-polymerizing 65 to 5 parts by weight of at least one monomer (B) selected from the group consisting of (meth) acrylic acid ester, aromatic vinyl, and a vinyl cyanide compound in a presence of 35 to 95 parts by weight of the polyorganosiloxane (A) consisting of 0.001 to 0.5% by weight of a bifunctional siloxane-based graft-crosslinking agent (a) and 99.999 to 99.5 % by weight of an organosiloxane (b), wherein a degree of swelling of an acetone-insoluble matter in toluene is 4000% or more. The present invention further relates to a vinyl chloride-based resin composition containing 0.01 to 3 parts by weight of the polyorganosiloxane-containing graft copolymer (C), 100 parts by weight of a vinyl chloride-based resin (D), and 3 to 25 parts by weight of a rubber-containing graft polymer (E) obtained by graft-polymerizing a vinyl monomer to a butadiene-based rubber or an acryl-based rubber, the resin composition having excellent impact resistance.

Examples of the bifunctional siloxane-based graft-crosslinking agent (a) used in the present invention include p-vinylphenylmethyldimethoxysilane, p-vinylphenylethyldimethoxysilane, 2-(p-vinylphenyl)ethylmethyldimethoxysilane, 3-(p-vinylbenzoyloxy)propylmethyldimethoxysilane, p-vinylphenylmethyldimethoxysilane, vinylmethyldimethoxysilane, allylmethyldimethoxysilane, mercaptopropylmethyldimethoxysilane, methacryloxypropylmethyldimethoxysilane, acryloxypropylmethyldimethoxysilane and the like. Among them, in view of impact resistance, mercaptopropylmethyldimethoxysilane and methacryloxypropylmethyldimethoxysilane are particularly preferred.

An amount of the bifunctional siloxane-based graft-crosslinking agent (a) to be used in the polyorganosiloxane (A) is from 0.001 to 0.5% by weight, more preferably from 0.01 to 0.3% by weight, particularly preferably from 0.1 to 0.25% by weight. When the amount of the bifunctional siloxane-based graft-crosslinking agent is larger than 0.5% by weight, the polyorganosiloxane-containing graft copolymer in a molded article of the vinyl chloride-based resin composition maintains particle diameters in a latex state, so that transparency of the molded article tends to be considerably lowered and an improvement effect on impact resistance tends to become small. On the other hand, when the amount of the bifunctional graft-crosslinking agent becomes smaller than 0.001% by weight, the polyorganosiloxane-containing graft copolymer is broken into very small particles while molding in a molded article of the vinyl chloride-based resin composition, but since there are too small amount of graft components, a part of them reaggregate to form a large mass, so that transparency of the molded article tends to be lowered. Additionally, the improvement effect on impact resistance also tends to become small.

The organosiloxane (b) that can be used in the present invention is not particularly limited as long as it has a structural unit represented by the general formula $R_mSiO_{(4-m)/2}$ wherein R is a substituted or unsubstituted monovalent hydrocarbon group; and m represent an integer from 0 to 3. Among them, in particular, in view of impact resistance and transparency, m in the formula is preferably 2 or 3, most preferably 2. They have a straight-chain, branched or cyclic structures, preferably organosiloxane having cyclic structures . An amount of the organosiloxane (b) to be used in the polyorganosiloxane (A) is 99.999 to 99.5% by weight, more preferably 99.99 to 99.7% by weight, particularly preferably 99.9 to 99.75% by weight.

The hydrocarbon group R which is the substituted or unsubstituted monovalent contained in the organosiloxane include, for example, a methyl group, an ethyl group, a propyl group, a phenyl group, and a substituted hydrocarbon group obtained by substituting these groups with a cyano group and the like. When two or more R's are present, they may be the same or different. Specific examples of the organosiloxane include straight-chain or branched organosiloxane in addition to cyclic compounds such as hexamethylcyclotrisiloxane (D3), octamethylcyclotetrasiloxane (D4), decamethylcyclopentasiloxane (D5), dodecamethylcyclohexasiloxane (D6), and trimethyltriphenylcyclotrisiloxane. These organosiloxanes may be used alone or as a combination of two or more.

In view of transparency, the organosiloxane (b) that can be used in the present invention preferably contains a diphenyldialkoxysilane (c) in an amount of 1 to 40% by weight, more preferably 10 to 30% by weight. Examples of the diphenyldialkoxysilane (c) include diphenyldimethoxysilane, diphenyldiethoxysilane and the like. When the amount of the diphenyldialkoxysilane (c) in the organosiloxane (b) becomes lager than 40% by weight, an improvement effect on a molded article of the vinyl chloride-based resin composition may become small.

In synthesizing the polyorganosiloxane (A) used in the present invention, a crosslinker may be added if necessary. Examples of the crosslinker may include trifunctional crosslinkers such as methyltrimethoxysilane, phenyltrimethoxysilane, and ethyltriethoxysilane; and a tetrafunctional crosslinkers such as tetraethoxysilane, 1,3 bis [2-(dimethoxymethylsilyl) ethyl]benzene, 1,4-bis [2-(dimethoxymethylsilyl) ethyl]benzene, 1,3-bis[1-(dimethoxymethylsilyl) ethyl] benzene, 1,4-bis [1-(dimethoxymethylsilyl) ethyl]benzene, 1-[1-(dimethoxymethylsilyl) ethyl]-3-[2-(dimethoxymethylsilyl) ethyl]benzene, and 1-[1-(dimethoxymethylsilyl) ethyl]-4-[2-dimethoxymethylsilyl) ethyl]benzene. These crosslinkers may be used alone or as a mixture of two or more. When an amount of the crosslinker to be added is too large, flexibility of the polyorganosiloxane (A) is undermined, so that impact resistance of a final molded article may become lowered.

A method for producing the polyorganosiloxane (A) used in the present invention is not particularly limited, and the polyorganosiloxane (A) can be obtained by, for example, a publicly known method of emulsion polymerization disclosed in Japanese Patent Application Laid-Open Publication No. 60-252613. However, in view of the advantage that a particle diameter distribution of the polyorganosiloxane (A) in a latex state can be narrowed, seed polymerization is preferably used. A seed polymer used for the seed polymerization in this case is not limited to a rubber component such as a butyl acrylate rubber, a butadiene rubber, a butadiene-styrene rubber and a butadiene-acrylonitrile rubber; a polymer such as a butyl acrylate-styrene copolymer and a styrene-acrylonitrile copolymer may be used without any problem. For polymerization of the seed polymer, a chain transfer agent may also be used.

A volume average particle diameter of the polyorganosiloxane (A) in a latex state is preferably from 0.001 to 0.075 $\mu$m, preferably from 0.005 to 0.04 $\mu$m. The volume average particle diameter can be measured by using, for example, MICROTRAC UPA manufactured by LEED&NORTHRUP INSTRUMENTS.

The monomer (B) used in the present invention is a component for uniformly dispersing the polyorganosiloxane-containing graft copolymer (C) in the vinyl chloride-based resin while ensuring compatibility between the graft copolymer and the vinyl chloride-based resin. Specifically, for example, at least one kind from following three kinds can be used: aromatic vinyl-based monomers such as styrene and $\alpha$-methyl styrene; vinyl cyanide-based monomers such as acrylonitrile; and (meth) acrylic acid ester-based monomers such as methyl acrylate, ethyl acrylate, butyl acrylate, 2-ethylhexyl acrylate, methyl methacrylate, ethyl methacrylate, butyl methacrylate, and 2-ethylhexyl methacrylate. Among them, the monomer (B) is preferably (meth) acrylic acid ester such as (meth) acrylic acid alkyl ester in view of transparency. The graft polymerization may be performed in a single stage, or in two or more stages. In the present invention, (meth)acryl means acryl and/or methacryl unless explained otherwise.

In the present invention, the graft polymerization of the monomer (B) can be performed by a publicly known method. Specific examples of the radical polymerization initiator include organic peroxides such as cumene hydroperoxide, t-butyl hydroperoxide, benzoyl peroxide, t-butylperoxy isopropyl carbonate; inorganic peroxides such as potassium persulfate and ammonium persulfate; and azo compounds such as 2,2'-azobisisobutyronitrile, and 2,2'-azobis-2,4-dimethylvaleronitrile. When the polymerization is carried out using redox systems such as ferrous sulfate-sodium formaldehyde sulfoxylate-ethylenediamine tetra acetic acetic·2Na salt, ferrous sulfate-glucose-sodium pyrophosphate, ferrous sulfate-sodium pyrophosphate-phosphoric acid sodium, the polymerization can be completed efficiently even at a low polymerization temperature.

The polyorganosiloxane-containing graft copolymer (C) in the present invention is preferably a graft copolymer obtained by graft-polymerizing 65 to 5 parts by weight of the monomer (B) with respect to 35 to 95 parts by weight of the polyorganosiloxane (A); more preferably, it is a graft copolymer obtained by graft-polymerizing 40 to 15 parts by weight of the monomer (B) with respect to 60 to 85 parts by weight of the polyorganosiloxane (A). It is to note that a total of the above (A) and (B) is 100 parts by weight. When a content of the polyorganosiloxane (A) is less than 35 parts by weight, impact resistance of the resultant resin composition tends to be lowered; on the other hand, when it is more than 95 parts by weight, a tendency is that a good powder resin cannot be obtained.

A degree of swelling of an acetone-insoluble matter of the polyorganosiloxane-containing graft copolymer (C) of the present invention in toluene is preferably 4000% or more, and further preferably infinitive (completely dissolved in toluene). When the degree of swelling of the acetone-insoluble matter of the polyorganosiloxane-containing graft copolymer (C) in toluene becomes less than 4000%, the polyorganosiloxane-containing graft copolymer (C) in the molded article of the vinyl chloride-based resin composition tends to maintain particle diameters in a latex state, in which case transparency is considerably lowered and an improving effect on impact resistance tends to become small.

The degree of swelling of the acetone-insoluble matter in toluene can be obtained by a following method: after mixing a resin powder of the polyorganosiloxane-containing graft copolymer (C) with acetone, shaking the mixture in a shaker and then subjecting the mixture to centrifugal separation followed by subjecting an insoluble matter of the mixture to vacuum drying. A certain amount of the insoluble matter is weighed and put in toluene and left to stand for a certain period of time, and then filtered with a woven metal wire with a mesh of 200. By measuring the weight of the swollen material in toluene, the degree of swelling in toluene in the acetone-insoluble matter can be calculated.

As a method of separating a polymer from a latex of the polyorganosiloxane-containing graft copolymer (C) obtained by emulsion polymerization, publicly known methods may be used. Examples of the method include a method of solidifying by adding a metal salt such as calcium chloride, magnesium chloride, and magnesium sulfate to the latex, separating, washing, dehydrating and drying the latex. Spray-drying method can also be used.

The polyorganosiloxane-containing graft copolymer (C) thus obtained can be used by blending in various thermoplastic resins and the like. Among them, it is preferred to blend 0.01 to 3 parts by weight of the polyorganosiloxane-containing graft copolymer (C) in 100 parts by weight of the vinyl chloride-based resin (D) and 3 to 25 parts by weight of the rubber-containing graft polymer (E) obtained by graft-polymerizing a vinyl monomer to a butadiene-based rubber such as a MBS resin and the like or an acryl-based rubber to be molded into various shapes. In particular, an amount of the polyorganosiloxane-containing graft copolymer (C) to be blended is more preferably 0.01 to 0.5 part by weight. When the amount of the polyorganosiloxane-containing graft copolymer (C) to be blended is smaller than 0.01 part by weight, an improving effect on impact resistance of the final molded article is small; on the other hand, when it is more than 3 parts by weight, an appearance of the molded article may become poor. Additionally, when an amount of the rubber-containing graft polymer (E) to be blended is less than 3 parts by weight, impact resistance of the final molded article becomes low; one the other hand, when it is more than 25 parts by weight, tensile strength of the molded article may be considerably lowered.

Examples of the vinyl chloride-based resin (D) of the present invention include polyvinyl chloride, a copolymer containing 50 % by weight or more of vinyl chloride with a monomer capable of copolymerizing with vinyl chloride such as vinyl acetate and ethylene, a chlorinated vinyl chloride resin and the like.

The rubber-containing graft polymer (E) obtained by graft-polymerizing the vinyl monomer with the butadiene-based rubber or the acryl-based rubber in the present invention is not particularly limited and a publicly known polymer may be used, and for example, one exemplified in Japanese Examined Patent Application Publication No. 42-22541 may be used.

The vinyl chloride-based resin composition of the present invention is preferably transparent depending on its application. In the present invention, transparent means a state in which a molded article with a thickness of 5 mm has a haze of at least 40 or less, preferably 25 or less.

Into the vinyl chloride-based resin composition of the present invention, a publicly known additive such as a pigment, a dye, a heat stabilizer, an antioxidant, an ultraviolet absorber, a light stabilizer, a lubricant, a plasticizer, a flame retardant, and an antistatic agent may be further added depending on its purpose.

The vinyl chloride-based resin composition obtained in the present invention may be molded by a publicly known method such as extrusion molding, injection molding, and calendar molding. Since the resultant molded products are excellent in impact resistance and transparency, they can be widely used for, for example, automobile components, components for home electric appliances, household goods, packaging materials, and other general industrial materials.

EXAMPLES

Hereinafter, the present invention will be described in more detail with reference to Examples, but the present invention is not restricted by the following Examples. The measurements and tests in the following Examples and Comparative Examples were carried out in following manners.

[Polymerization conversion]

Latex was dried in an air forced oven at 120° C for 1 hour to obtain the solid content thereof, from which the polymerization conversion was calculated by the formula: 100 X solid content/ amount of monomer fed (%).

[Volume average particle diameter]

Volume average particle diameters of a seed polymer, a polyorganosiloxane particle and a graft copolymer were measured in a latex state. As the measurement device, MICROTRAC UPA manufactured by LEED&NORTHRUP INSTRUMENTS was used to measure the volume average particle diameters ($\mu$m) by light scattering method.

[Degree of swelling of acetone-insoluble matter in toluene]

After a resin powder of the polyorganosiloxane-containing graft copolymer was mixed with acetone, the mixture was shaken in a shaker for 6 hours and then was subjected to centrifugal separation at 23000 rpm for one hour. After the resultant insoluble matter was subjected to vacuum drying, about 0.2 g of the insoluble matter was weighed (X) and put in 50cc of toluene to be left for 3 days. Next, it was filtered with a woven metal wire with a mesh of 200, and after a lapse of 10 minutes, a weight of the swollen material in toluene (Y) was measured. A degree of swelling of acetone-insoluble matter in toluene (Z) was calculated by the following formula.

$$Z\ (\%) = 100(Y/X)$$

[Haze]

Test pieces with a thickness of 5 mm were made to carry out measurement using a haze meter.

[Izod impact strength]

Test pieces for Izod test with a thickness of 6 mm were prepared to carry out measurement in accordance with JIS-K7110 at 23°C.

(Examples 1 to 11, Comparative Examples 1 to 7)

In a five-neck flask equipped with a stirrer, a reflux condenser, a nitrogen adding inlet, a monomer adding inlet, and a thermometer, 400 parts by weight of water (a total amount of water including various dilution waters) and 8 parts by weight of sodium dodecylbenzene sulfonate (hereinafter also referred to as SDBS) (solid amount) were mixed followed by heating to 50° C, and after the temperature of the liquid reached 50° C, nitrogen substitution was carried out. After that, a mixture of 10 parts by weight of butyl acrylate, 3 parts by weight of t-dodecylmercaptan, 0.01 part by weight of paramenthane hydroperoxide was added thereto. After a lapse of 30 minutes, 0.002 part by weight of ferrous sulfate ($FeSO_4 \cdot 7H_2O$), 0. 005 part by weight of ethylenediamine tetra acetic acid·2Na salt, and 0.2 part by weight of sodium formaldehyde sulfoxylate were added to carry out polymerization for one hour. Then, a mixture of 90 parts by weight of butyl acrylate, 27 parts by weight of t-dodecylmercaptan, and 0.1 part by weight of paramenthane hydroperoxide was continuously added for 3 hours. Two hours of post-polymerization was carried out to give a seed latex (seed 1). A volume average particle diameter after the synthesis was 0.04 $\mu$m.

In a five-neck flask equipped with a stirrer, a reflux condenser, a nitrogen adding inlet, a monomer-adding inlet, and a thermometer, 450 parts by weight of water (a total amount of water including various dilution waters), 2 parts by weight of seed latex (seed 1) (solid amount) and dodecylbenzene sulfonic acid (hereinafter also referred to as DBSA) in the amount shown in Table 1 (solid amount) were mixed followed by heating to 80° C, and after the temperature of the liquid reached 80°C, a nitrogen substitution was carried out. After that, an emulsified liquid was continuously added thereto continuously for 3 hours, the emulsified liquid obtained by stirring a mixture consisting of 150 parts by weight of pure water, 0.5 part by weight of sodium dodecylbenzene sulfonate (solid amount), octamethylcyclotetrasiloxane (hereinafter also referred to as D4) in the amount shown in Table 1, diphenyldimethoxysilane (hereinafter also referred to as DPhDMS) in the amount shown in Table 1, and a graft-crosslinking agent in the amount shown in Table 1 at 7000 rpm for 5 minutes using a homo-mixer. After finishing the addition, the mixture was stirred at 80° C for two hours and then cooled to 25° C, followed by being left to stand for 20 hours. After that, pH of the mixture was made to be 6.4 with sodium hydroxide to finish the polymerization, thereby obtaining polyorganosiloxane latex (R1 to 8). A volume average particle diameter of the latex is shown in Table 1.

In a five-neck flask equipped with a stirrer, a reflux condenser, a nitrogen adding inlet, a monomer adding inlet, and a thermometer, 500 parts by weight of water (a total amount of water including various dilution waters) and 80 parts by weight of the polyorganosiloxane (solid amount) shown in Table 2 or 3 are fed and heated to 60° C while stirring under nitrogen stream. After the temperature reached at 60° C, 0.2 part by weight of sodium formaldehyde sulfoxylate, 0.0032 part by weight of ethylenediamine-tetra-acetic acid disodium, and 0.0008 part by weight of ferrous sulfate ($FeSO_4 \cdot 7H_2O$) were added and then a mixture of the monomer shown in Table 2 or 3 and 0.07 part by weight of cumene hydroperoxide was dropped thereto for two hours (in a case of two-stage addition, one stage took one hour with an interval of 30 minutes between stages), and after finishing the addition, the mixture was continuously stirred for 3 hours to obtain a graft copolymer latex. Subsequently, 4 parts by weight (solid amount)of a 25% by weight aqueous solution of calcium chloride was added to the graft copolymer latex to obtain a coagulated slurry. The coagulated slurry was heated to 95° C and then cooled to 50° C followed by dehydration, and was washed with methanol in an amount of 10 times of the solid amount for one hour, followed by filtration and drying, thereby obtaining a polyorganosiloxane-containing graft copolymer. A degree of swelling of an acetone-insoluble matter in toluene was measured with respect to the resin powder, and the results are shown in Table 2 or 3.

Into 100 parts by weight of a vinyl chloride resin with a degree of polymerization of 700 (Kanevinyl S1007 manufactured by KANEKA CORPORATION), a MBS resin (B-52 manufactured by KANEKA CORPORATION) in the amount shown in Table 2 or 3, a polyorganosiloxane-containing graft copolymer in the amount shown in Table 2 or 3, 2.0 parts by weight of octyl tin mercaptide, 0.5 part by weight of glycerin ricinolate, and 0.2 part by weight of montanic acid ester were blended, and after the mixture was kneaded with a roll at 160° C for 5 minutes, it was subjected to pressing with a hot press at 190° C for 15 minutes, thereby obtaining a test piece for Izod test with a thickness of 6 mm and a test piece for haze measurement with a thickness of 6 mm. The results of Izod impact strength, haze measurement and rolling workability are shown in Table 2 or 3.

(Comparative Example 8)

Into 100 parts by weight of a vinyl chloride resin with a degree of polymerization of 700 (Kanevinyl S1007 manufactured by KANEKA CORPORATION), 8 parts by weight of a MBS resin (B-52 manufactured by KANEKA CORPORATION), 0.3 part by weight of a silicone oil (SH200 manufactured by Dow Corning Toray Co.,Ltd.), 2.0 parts by weight of octyl tin mercaptide, 0.5 part by weight of glycerin ricinolate, and 0.2 part by weight of montanic acid ester were blended, and after the mixture was kneaded with a roll at 160° C for 5 minutes, it was subjected to pressing with a hot press at 190° C for 15 minutes, thereby obtaining a test piece for Izod test with a thickness of 6 mm and a test piece for haze measurement with a thickness of 6 mm. The results of Izod impact strength, haze measurement and rolling workability are shown in Table 3.

[Table 1]

| | R-1 | R-2 | R-3 | R-4 | R-5 | R-6 | R-7 | R-8 |
|---|---|---|---|---|---|---|---|---|
| DBSA (part(s) by weight) | 1 | 1 | 3 | 1 | 3 | 3 | 1 | 1 |
| D4/DPhDMS (part(s) by weight) | 100/0 | 100/0 | 100/0 | 90/10 | 90/10 | 75/25 | 100/0 | 100/0 |
| Graft-crosslinking agent (part(s) by weight) | DSMA (0.2) | MPrDMS (0.2) | DSMA (0.2) | DSMA (0.2) | DSMA (0.2) | DSMA (0.2) | DSMA(1) | DSMA (2) |
| Particle diameter of polyorganosiloxane (μm) | 0.25 | 0.25 | 0.01 | 0.25 | 0.01 | 0.01 | 0.25 | 0.25 |

DBSA: dodecylbenzene sulfonate,
D4: octamethylcyclotetrasiloxane,
DPhDMS: diphenyldimethoxysilane,
DSMA: methacryloxypropylmethyldimethoxysilane,
MPrDMS: mercaptopropyldimethoxymethylsilane

[Table 2]

| (Examples) | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Graft copolymer | | | | | | | | | | | | |
| | Polyorganosiloxane (part(s) by weight) | R-1 (80) | R-2 (80) | R-3 (80) | R-4 (80) | R-5 (80) | R-6 (80) | R-3 (80) | R-3 (80) | R-3 (80) | R-3 (80) | R-3 (80) |
| | First stage grafting | MMA (20) | MMA (20) | MMA (20) | MMA (20) | MMA (20) | MMA (20) | ST (20) | MMA (10) ST (10) | AN(5) ST (15) | MMA (10) | ST (10) |
| | Second stage grafting | - | - | - | - | - | - | - | - | - | ST(10) | MMA(10) |
| | Degree of swelling of an acetone-insoluble matter in toluene | ∞ | ∞ | ∞ | ∞ | ∞ | ∞ | ∞ | ∞ | ∞ | ∞ | ∞ |
| Properties of vinyl chrolide composition | | | | | | | | | | | | |

(continued)

(Examples)

|  |  | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
|  | vinyl chrolide resin (part(s) by weight) | 100 | 100 | 100 | 100 | 100 | 100 | 100 | 100 | 100 | 100 | 100 |
|  | MBS (B-52) (part(s) by weight) | 8 | 8 | 8 | 8 | 8 | 8 | 8 | 8 | 8 | 8 | 8 |
|  | Graft copolymer (part(s) by weight) | 0.3 | 0.3 | 0.3 | 0.3 | 0.3 | 0.3 | 0.3 | 0.3 | 0.3 | 0.3 | 0.3 |
|  | Silicone oil SH200 (part(s) by weight) | - | - | - | - | - | - | - | - | - | - | - |
|  | Rolling workability | No problem | No problem | No problem | No problem | No problem | No problem | No problem | No problem | No problem | No problem | No problem |
|  | Izod impact strength (Kg-cm/cm$^2$) | 51 | 55 | 86 | 66 | 87 | 103 | 60 | 65 | 80 | 60 | 110 |
|  | Haze(%) | 20 | 20 | 17 | 19 | 16 | 14 | 23 | 24 | 19 | 23 | 18 |
| MMA: methyl metacrylate, ST: styrene, AN: acrylonitrile | | | | | | | | | | | | |

[Table 3]

| (Comparative Examples) | | | | | | | | |
|---|---|---|---|---|---|---|---|---|
| | Comparative Example 1 | Comparative Example 2 | Comparative Example 3 | Comparative Example 4 | Comparative Example 5 | Comparative Example 6 | Comparative Example 7 | Comparative Example 8 |
| Graft copolymer | | | | | | | | |
| Polyorganosiloxane (part(s) by weight) | - | - | R-7 (80) | R-8 (80) | - | R-1 (80) | R-1 (80) | - |
| First stage grafting | - | - | MMA (20) | MMA (20) | - | MMA (20) | MMA (20) | - |
| Second stage grafting | - | - | - | - | - | - | - | - |
| Degree of swelling of an acetone-insoluble matter in toluene | - | - | 1000 | 500 | - | ∞ | ∞ | - |
| Properties of vinyl chrolide composition | | | | | | | | |
| Vinyl chrolide resin (part(s) by weight) | 100 | 100 | 100 | 100 | 100 | 100 | 100 | 100 |
| MBS (B-52) (part(s) by weight) | 8 | 9 | 8 | 8 | 0 | 8 | 0 | 8 |
| Graft copolymer (part(s) by weight) | 0 | 0 | 0.3 | 0.3 | 0 | 10 | 0.3 | 0 |
| Silicone oil SH200 (part(s) by weight) | - | - | - | - | - | - | - | 0.3 |
| Rolling workability | No problem | No problem | No problem | No problem | No problem | Not winding | No problem | No problem |
| Izod impact strength (Kg-cm/cm$^2$) | 14 | 24 | 19 | 15 | 3 | - | 3 | 50 |
| Haze (%) | 9 | 9 | 81 | 80 | 4 | - | 9 | 51 |

The vinyl chlolide-based resin composition comprising 0.01 to 3 parts by weight of the polyorganosiloxane-containing graft copolymer obtained by graft-polymerizing 65 to 5 parts by weight of at least one monomer selected from the group consisting of (meth)acrylic acid ester, aromatic vinyl, and a vinyl cyanide compound in a presence of 35 to 95 parts by weight of polyorganosiloxane consisting of 0.001 to 0.5% by weight of the bifunctional siloxane-based graft-crosslinking agent and 99.999 to 99.5% by weight of the organosiloxane wherein a degree of swelling of acetone-insoluble matter in toluene is 4000% or more, 100 parts by mass of the vinyl chlolide-based resin, and 3 to 25 parts by weight of the rubber-containing graft polymer obtained by graft-polymerizing a vinyl monomer with a butadinene-based rubber or an acryl-based rubber exhibited high impact resistance and excellent transparency.

**Claims**

1. A graft copolymer which is a polyorganosiloxane-containing graft copolymer (C) obtained by graft-polymerizing 65 to 5 parts by weight of at least one monomer (B) selected from the group consisting of (meth) acrylic acid ester, aromatic vinyl, and a vinyl cyanide compound in a presence of 35 to 95 parts by weight of polyorganosiloxane (A) consisting of 0.001 to 0.5% by weight of a bifunctional siloxane-based graft-crosslinking agent (a) and 99.999 to 99.5% by weight of organosiloxane (b) (with the proviso that a total of the (A) and (B) is 100 parts by weight), wherein a degree of swelling of an acetone-insoluble matter in toluene is 4000% or more.

2. The polyorganosiloxane-containing graft copolymer according to claim 1, wherein the polyorganosiloxane (A) comprises 0.01 to 0.3% by weight of the bifunctional siloxane-based graft-crosslinking agent (a) and 99.99 to 99.7% by weight of the organosiloxane (b).

3. The polyorganosiloxane-containing graft copolymer according to claim 1 or 2, wherein the polyorganosiloxane (A) has a volume average particle diameter of 0.001 to 0.075 μm.

4. The polyorganosiloxane-containing graft copolymer according to any one of claims 1 to 3, wherein the organosiloxane (b) contains 1 to 40% by weight of diphenyldialkoxysilane (c).

5. The polyorganosiloxane-containing graft copolymer according to any one of claims 1 to 4, wherein the monomer (B) is (meth)acrylic acid ester.

6. A vinyl chloride-based resin composition **characterized by** containing 100 parts by weight of a vinyl chloride-based resin (D), 3 to 25 parts by weight of a rubber-containing graft polymer (E) obtained by graft-polymerizing a vinyl-based monomer with a butadiene-based rubber or an acryl-based rubber, and 0.01 to 3 parts by weight of the polyorganosiloxane-containing graft copolymer (C) according to any one of claims 1 to 5.

7. The vinyl chloride-based resin composition according to claim 6, wherein a content of the polyorganosiloxane-containing graft copolymer (C) is from 0.01 to 0.5 part by weight.

8. The vinyl chloride-based resin composition according to claim 6 or 7, **characterized by** being transparent.

<div align="center">

**INTERNATIONAL SEARCH REPORT**

</div>

| | International application No. |
|---|---|
| | PCT/JP2006/308524 |

**A. CLASSIFICATION OF SUBJECT MATTER**
*C08F283/12*(2006.01), *C08L27/06*(2006.01), *C08L51/08*(2006.01)

According to International Patent Classification (IPC) or to both national classification and IPC

**B. FIELDS SEARCHED**

Minimum documentation searched (classification system followed by classification symbols)
*C08F283/12*(2006.01), *C08L27/06*(2006.01), *C08L51/08*(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-137946 A  (KANEKA Corp.), 14 May, 2003 (14.05.03), Full text (Family: none) | 1-8 |
| X | JP 2000-302941 A  (KANEKA Corp.), 31 October, 2000 (31.10.00), Full text (Family: none) | 1-8 |
| X | JP 2000-212231 A  (KANEKA Corp.), 02 August, 2000 (02.08.00), Full text (Family: none) | 1-8 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 June, 2006 (13.06.06) | 27 June, 2006 (27.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2006/308524 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2000-186105 A  (KANEKA Corp.),<br>04 July, 2000 (04.07.00),<br>Full text<br>(Family: none) | 1-8 |
| X | JP 10-316724 A  (KANEKA Corp.),<br>02 December, 1998 (02.12.98),<br>Full text<br>(Family: none) | 1-8 |
| X | JP 10-310616 A  (KANEKA Corp.),<br>24 November, 1998 (24.11.98),<br>Full text<br>(Family: none) | 1-8 |
| X | JP 2000-264935 A  (KANEKA Corp.),<br>26 September, 2000 (26.09.00),<br>Full text<br>(Family: none) | 1-8 |
| X | JP 2002-173501 A  (KANEKA Corp.),<br>21 June, 2002 (21.06.02),<br>Full text<br>& WO 2002/46257 A1      & EP 1273601 A1<br>& US 2003-092819 A1 | 1-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4222541 B
- JP 47049191 B
- JP 4170458 A
- JP 2000239398 A
- JP 60252613 A